# EUROPÄISCHE PATENTSCHRIFT

(11) **EP 1 557 654 B1**
(45) Veröffentlichungstag und Bekanntmachung des Hinweises auf die Patenterteilung: **25.09.2013**
(21) Anmeldenummer: 04030314.1
(22) Anmeldetag: 21.12.2004
(51) Int. Cl.: G01L 23/22, F23Q 7/00

(54) **Glühkerzenstecker**
Glow plug connector
Connecteur pour bougie à incandescence

(30) Priorität: 20.01.2004 DE 102004002905
(43) Veröffentlichungstag der Anmeldung: 27.07.2005
(73) Patentinhaber: Beru AG, 71636 Ludwigsburg (DE); Hirschmann Automotive GmbH, 6830 Rankweil-Brederis (AT)
(72) Erfinder: Haussner, Michael, 71726 Benningen (DE); List, Gerald, 71282 Hemmingen (DE); Pechhold, Frank, 71642 Ludwigsburg (DE); Houben, Hans, 52146 Würselen (DE); Häfele, Jürgen, 6845 Hohenems (AT); Jäger, Werner, 6845 Hohenems (AT)
(74) Vertreter: Kotitschke & Heurung Partnerschaft

(56) Entgegenhaltungen:
- EP-A- 0 989 367
- WO-A-02/08714
- CH-A- 594 294
- DE-A1- 10 023 064
- DE-A1- 10 218 544
- US-A1- 2001 045 800

## Beschreibung

Die Erfindung betrifft eine Glühkerzenstecker für eine Glühkerze mit eingebautem Sensor, insbesondere mit eingebautem Drucksensor für eine Dieselbrennkraftmaschine.

Bei Glühkerzen, die mit einem eingebautem Sensor, insbesondere einem Drucksensor versehen sind, ist bisher üblich, die Heizeinrichtungen der Glühkerze und den Sensor separat anzuschließen, das heißt einen Glühkerzenstecker für die Funktionen der Glühkerze, insbesondere für die Stromversorgung der Heizeinrichtungen der Glühkerze und einen weiteren Stecker zum Anschluss des Sensors vorzusehen. Die Dokuments WO 02/08714, DE 102 18544 oder US 2001/0045800 beschreiben einige Beispiele für bekannten Kerzenstecker.

Da das erkennbar aufwändig ist, liegt die der Erfindung zugrunde Aufgabe darin, die Kontaktierung einer Glühkerze mit eingebautem Sensor, insbesondere eingebautem Drucksensor zu vereinfachen.

Diese Aufgabe wird gemäß der vorliegenden Erfindung durch die Ausbildung gelöst, die im Patentanspruch 1 angegeben ist.

Gemäß der Erfindung wird somit ein Glühkerzenstecker geschaffen, der dazu dient, eine Glühkerze mit eingebautem Sensor anzuschließen und der für die Kontaktierung der Heizeinrichtungen der Glühkerze und des Sensors der Glühkerze sorgt. Dabei sind die Kontaktierungen der Heizeinrichtungen der Glühkerze und des Sensors im Stecker integriert, so dass nur noch ein einziger Stecker zum Anschluss der Glühkerze mit eingebautem Sensor notwendig ist.

Besonders bevorzugte Weiterbildungen und Ausgestaltungen des erfindungsgemäßen Glühkerzensteckers sind Gegenstand der Patentansprüche 2 bis 9.

Bei einigen Ausbildungsformen ist es insbesondere möglich, die Position der auf den erfindungsgemäßen Glühkerzenstecker aufzusetzenden Kupplung beliebig über den vollen Winkelbereich von 360° zu wählen.

Bei der ringförmigen Anordnung der Sensorkontakte wird darüber hinaus nur ein sehr kleiner Bauraum benötigt, während bei bekannten Flachsteckern diese sehr breit ausgestaltet werden müssen.

Wenn einer der Sensorkontakte im Inneren des Steckergehäuses angeordnet ist, kann der Stecker konstruktiv noch kleiner ausgebildet werden.

Bei einer Anordnung der Sensorkontakte stufig auf immer etwas größeren Durchmessern ist eine sehr einfache Montage der Sensorkontakte möglich.

Wenn die Sensorkontakte senkrecht am Steckergehäuse verteilt angeordnet sind, ist zwar die Steckposition der Kupplung nicht mehr frei wählbar, durch eine Verdopplung der Sensorkontakte ist jedoch auch eine Verdopplung der möglichen Steckpositionen erzielbar, die beispielsweise durch ein Verdrehen um 120° erreicht werden. Eine entsprechende Vervielfältigung der Sensorkontakte führt zu einer entsprechend größeren Anzahl von möglichen Steckpositionen.

Durch die Anordnung einer Dichtung ist es möglich, das System aus Kupplung und Glühkerzenstecker gegen Umwelteinflüsse zu schützen.

Wenn der Glühkerzenhochstromanschluss federnd ausgebildet oder federnd gelagert ist, ist es darüber hinaus möglich, die Bewegungen des Heizstabes in der Glühkerze vom Glühkerzenstecker abzukoppeln.

Im Folgenden werden anhand der zugehörigen Zeichnungen besonders bevorzugte Ausführungsbeispiele der Erfindung näher beschrieben. Es zeigen
Fig. 1 eine Teilschnittansicht und eine perspektivische Ansicht eines ersten Ausführungsbeispiels der Erfindung,
Fig. 2 eine Teilschnittansicht und eine perspektivische Ansicht eines zweiten Ausführungsbeispiels der Erfindung,
Fig. 3 eine Teilschnittansicht und eine perspektivische Ansicht eines dritten Ausführungsbeispiels der Erfindung,
Fig. 4 eine Teilschnittansicht und eine perspektivische Ansicht eines gefederten Hochstromkontaktes bzw. eines Federhochstromkontaktes bei einem Ausführungsbeispiel der Erfindung,
Fig. 5 in einer perspektivischen Ansicht und in einer Schnittansicht ein viertes Ausführungsbeispiel der Erfindung in zwei Varianten,
Fig. 6 in einer Seitenansicht und einer Schnittansicht ein fünftes Ausführungsbeispiel der Erfindung mit zugehöriger Kupplung und
Fig. 7 in einer auseinandergezogenen Ansicht das Glühkerzensteckersystem aus Kupplung, Glühkerzenstecker und Glühkerze.

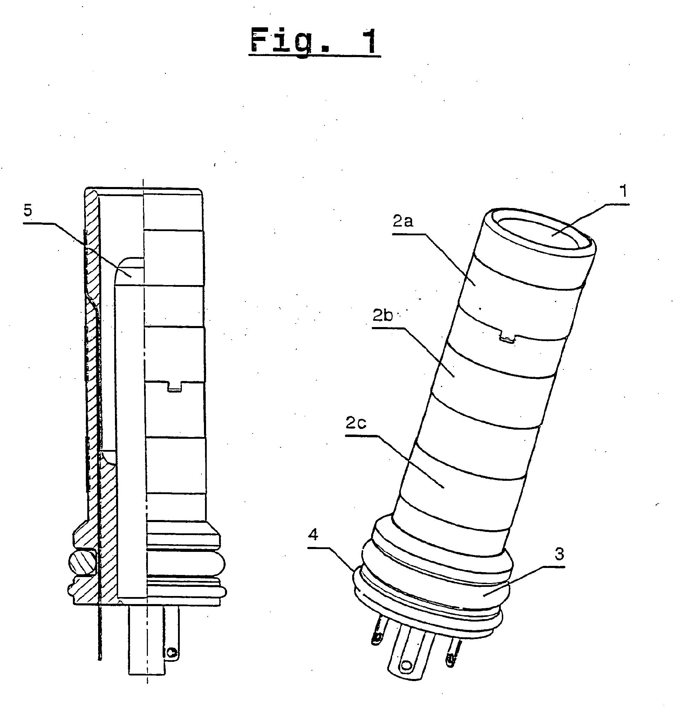

Das in Fig. 1 dargestellte erste Ausführungsbeispiel des erfindungsgemäßen Glühkerzensteckers zum Aufsetzen auf eine Glühkerze mit eingebautem Sensor, insbesondere eingebautem Drucksensor umfasst ein Gehäuse 1 aus einem elektrisch isolierenden Material, insbesondere einem Kunststoffmaterial, das auf die Glühkerze aufsetzbar ist.

Mittig im Gehäuse 1 ist ein Hochstromanschluss 5, insbesondere in zylindrischer Form vorgesehen, der bei auf die Glühkerze aufgesetztem Stecker mit dem Hochstromkontakt der Heizeinrichtungen der Glühkerze verbunden ist. Der Hochstromanschluss 5 entspricht dem entsprechenden Standardanschluss für übliche Glühkerzen.

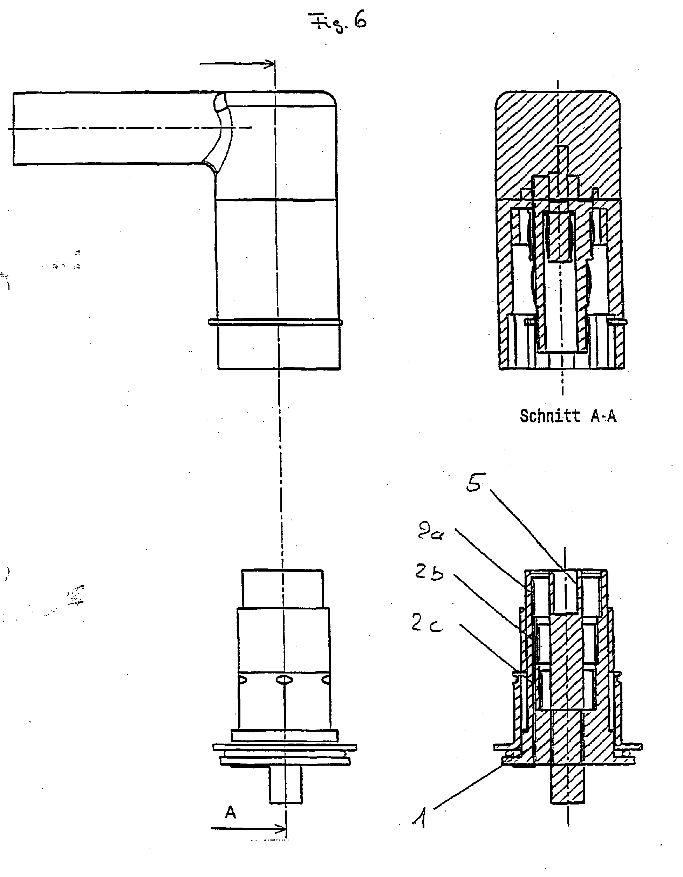

Zum Betreiben des in die Glühkerze integrierten Sensors, beispielsweise eines in die Glühkerze eingebauten Drucksensors zum Messen des Drucks im Brennraum der Brennkraftmaschine und zur Auswertung der Sensorsignale sind je nach Bauart des Sensors zwei bis drei Sensorkontakte 2a-2c vorgesehen, die bei dem in Fig. 1 dargestellten Ausführungsbeispiel so angeordnet sind, dass ein Gegenstecker oder eine Kupplung, die in Fig. 6 auf der linken Seite oben dargestellt ist, in einem beliebigen Verdrehwinkel über den vollen Winkelbereich von 360° aufgesteckt werden kann, um die Glühkerze mit dem eingebauten Sensor zu betreiben.

Wie es in Fig. 1 dargestellt ist, sind die Sensorkontakte 2a-2c außen am Umfang des Steckergehäuses 1 in Form von konzentrisch zur Längsachse des Steckergehäuses 1 angeordneten Ringen in Längsrichtung oder axialer Richtung des Steckergehäuses nebeneinander angeordnet. Der Hochstromanschluss 5 befindet sich immer zentral in der Mitte des Steckergehäuses 1.

Es ist aber auch möglich, die Sensorkontakte 2a-2c an der Innenseite des Steckergehäuses 1 oder teilweise an der Außenseite und teilweise an der Innenseite des Steckergehäuses 1 anzuordnen, was im Einzelnen anhand der weiteren Ausführungsbeispiele beschrieben wird.

Um bei aufgestecktem Gegenstecker oder aufgesteckter Kupplung für eine Schutz vor Umwelteinflüssen, insbesondere vor Feuchtigkeit zu sorgen, ist eine Dichtung 3, beispielsweise ein O-Ring vorgesehen, so dass die Kupplung formschlüssig mit Hilfe der Dichtung 3 am Steckergehäuse 1 gegen Umwelteinflüsse abdichtet. Beim Aufstecken der Kupplung rastet ein Mechanismus, der an der Kupplung vorgesehen ist, in eine Verriegelung 4 ein, die am Steckergehäuse 1 vorgesehen ist und die Abzugskräfte der Kupplung oder des Gegensteckers erhöht. Das hat zur Folge, dass die Kupplung oder der Gegenstecker nur bei einer Überwindung dieser Abzugskräfte vom Glühkerzenstecker gemäß der Erfindung abziehbar ist.

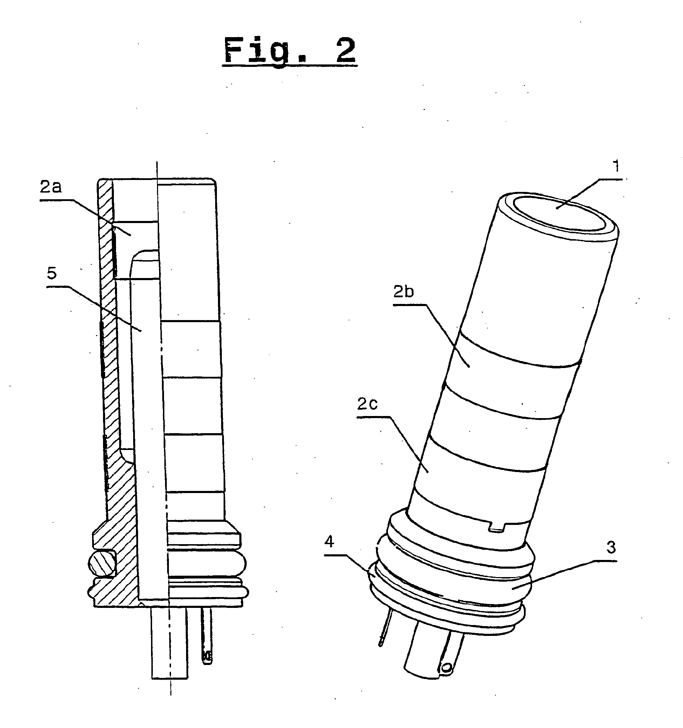

Das in Fig. 2 dargestellte Ausführungsbeispiel des erfindungsgemäßen Glühkerzensteckers entspricht dem in Fig. 1 dargestellten Ausführungsbeispiel mit der Ausnahme, dass zwei Sensorkontakte 2b und 2c an der Außenseite des Steckergehäuses 1 angeordnet sind, während der dritte Sensorkontakt 2a an der Innenseite liegt.

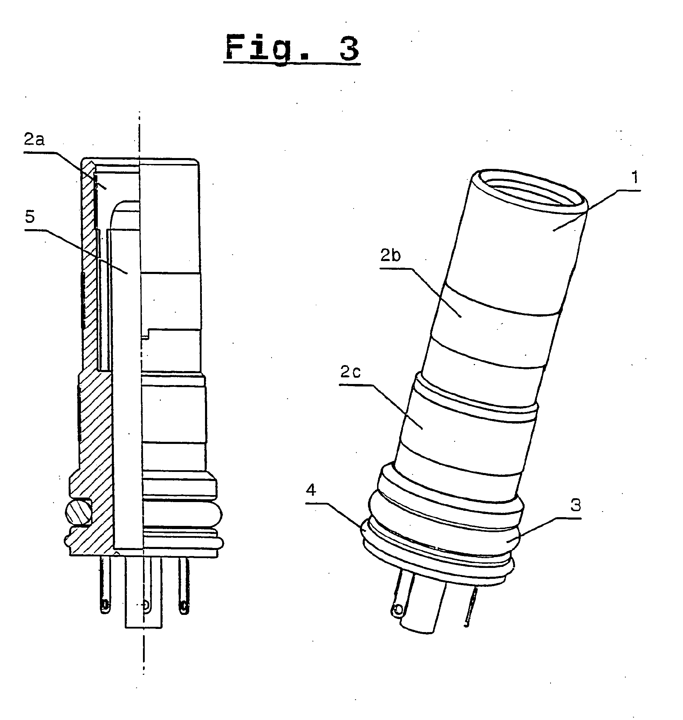

Fig. 3 zeigt ein Ausführungsbeispiel, bei dem gleichfalls zwei Kontakte 2b und 2c außen und der dritte Kontakt 2a innen am Steckergehäuse 1 vorgesehen sind, wobei jedoch die äußeren Kontakte 2b, 2c in Form von Ringen unterschiedlich abgestufte Durchmesser haben. Das heißt, dass die Sensorkontakte 2b, 2c abgestuft auf verschieden großen Durchmessern angeordnet sind, was eine einfache Montage der Sensorkontakte 2b, 2c ermöglicht.

Bei allen Ausführungsbeispielen, die in den Fig. 1 bis 3 dargestellt sind, sind Kontaktfahnen, die mit den Sensorkontakten 2a-2c verbunden sind, axial durch das Steckergehäuse 1 zur Anschlussseite an der Glühkerze so geführt, dass bei aufgesetztem Glühkerzenstecker diese mit den Kontakten des Sensors in Verbindung stehen. Das Gleiche gilt für den mittigen Hochstromanschluss 5, der zu selben Seite herausgeführt ist und bei aufgesetztem Glühkerzenstecker mit dem Hochstromanschluss der Glühkerze in Verbindung steht.

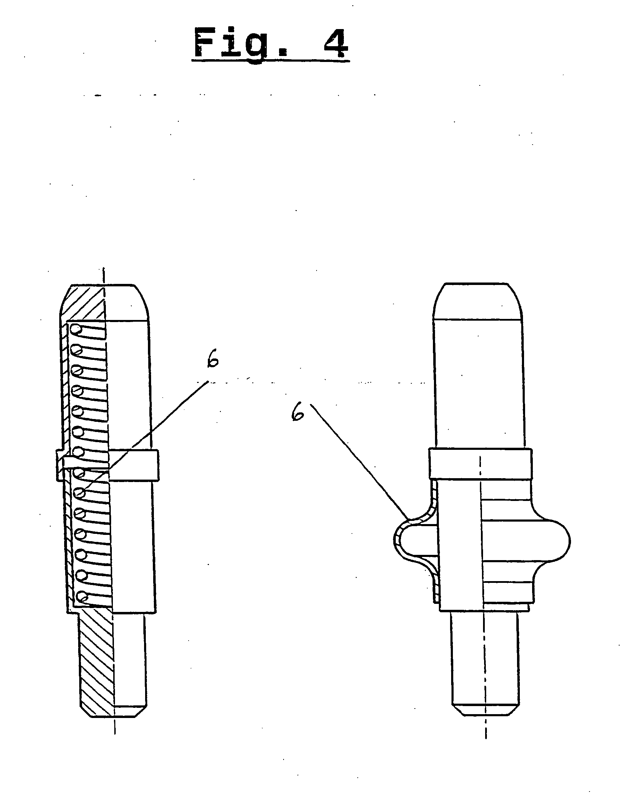

Fig. 4 zeigt ein Ausführungsbeispiel des Hochstromanschlusses in Form eines Federkontaktes mit einer Feder 6 oder in Form eines gefederten Kontaktes.

Diese Ausbildung dient dazu, beim Betrieb der Brennkraftmaschine, die auf die Glühkerze, insbesondere auf den Heizstab wirkenden Belastungen, insbesondere Schwingungen durch den gefederten Kerzenanschluss abzufangen, damit diese nicht auf die Kontaktstelle als Mikrobewegungen übertragen werden und dadurch für Ausfälle sorgen.

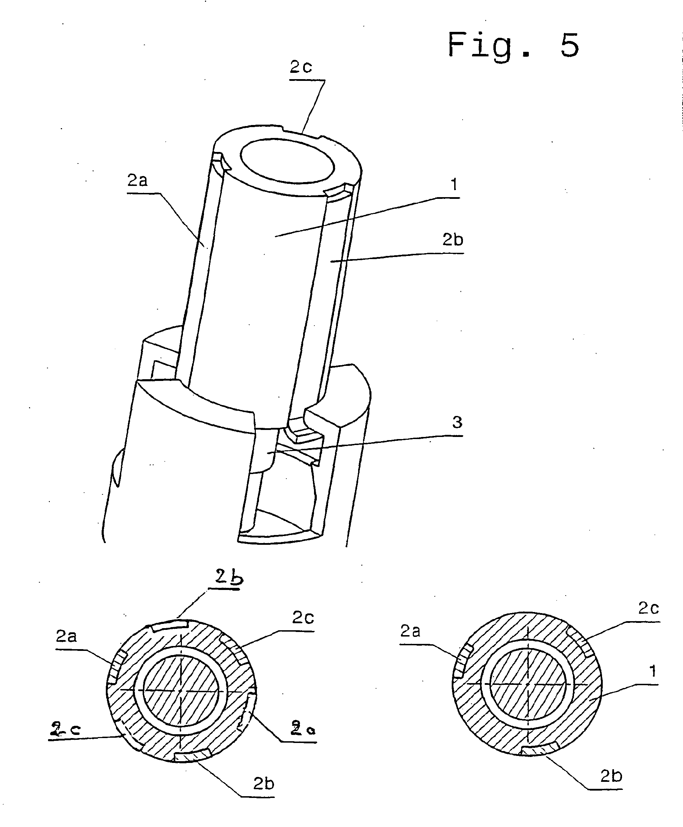

Fig. 5 zeigt ein viertes Ausführungsbeispiel der Erfindung, bei dem die Sensorkontakte 2a-2c nicht mehr in Längsrichtung des Steckergehäuses verteilt und in Umfangsrichtung über 360° verlaufen, sondern parallel zur Längsachse des Steckergehäuses 1 außen am Umfang des Steckergehäuses 1 angeordnet sind. Dieses Ausführungsbeispiel ermöglicht keine freie Wahl der Steckposition mehr, sondern setzt ein genau positioniertes Aufstecken der Kupplung voraus, wozu eine Kodierungsnase vorgesehen ist. Eine Variante, die in Fig. 5 links unten dargestellt ist, besteht darin, die Anzahl der Sensorkontakte 2a-2c zu vervielfältigen, insbesondere zu verdoppeln, um eine weitere Steckposition zu erhalten.

Bei dem in Fig. 6 dargestellten fünften Ausführungsbeispiel sind die Sensorkontakte 2a-2c innen am Steckergehäuse 1 vorgesehen, wobei die Kupplung mit einem zentralen Hohlrohr ausgebildet ist, an dessen Außenseite entsprechende Kontakte vorgesehen sind, die bei aufgesetzter Kupplung mit den an der Innenseite des Steckergehäuses 1 vorgesehenen Sensorkontakten 2a-2c in Kontakt kommen. Im zentralen Hohlrohr der Kupplung ist ein weiterer Kontakt, nämlich ein Hochstromkontakt vorgesehen, der bei aufgesetztem Stecker mit dem Hochstromkontakt 5 des Glühkerzensteckers in Kontakt kommt.

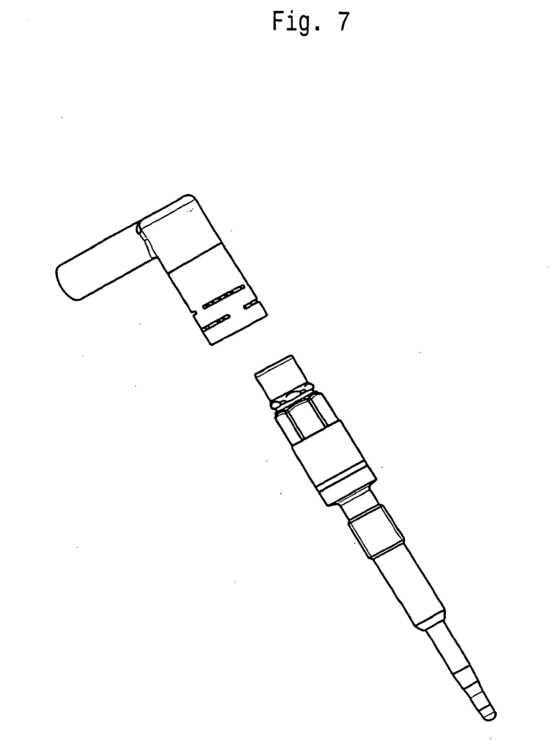

Fig 7 zeigt das Gesamtsystem aus Kupplung, Glühkerzenstecker und Glühkerze in einer auseinandergezogenen Ansicht.

Allen oben beschriebenen Ausführungsbeispielen des erfindungsgemäßen Glühkerzensteckers ist es eigen, dass sie sowohl für die Funktionen der Glühkerze, das heißt deren Heizeinrichtungen als auch für die Funktionen des eingebauten Sensors sorgen. Hierzu wird nur ein einziger Stecker benötigt, auf den zum weiteren Anschluss eine Kupplung aufgesetzt wird, in der wie üblich ein zentraler Anschluss in Form eines Federkäfigs den zylindrischen Glühkerzenanschluss des Glühkerzensteckers kontaktiert.

## Patentansprüche

1. Glühkerzenstecker für eine Glühkerze mit darin eingebautem Sensor insbesondere eingebautem Drucksensor, aufweisend
- ein Gehäuse (1) aus einem elektrisch isolierenden Material, das auf die Glühkerze aufsetzbar ist, **gekennzeichnet durch**
- einen mittig im Gehäuse (1) angeordneten Hochstromanschluss (5), der bei aufgesetztem Stecker mit einem Hochstrornkontakt der Heizeinrichtungen der Glühkerze verbunden ist und
- Sensorkontakten (2a-2c), die gegenüber dem Hochstromanschluss (5) isoliert am Gehäuse (1) an dessen Umfang vorgesehen sind und bei aufgesetztem Stecker mit Sensoranschlüssen der Glühkerze verbunden sind.

2. Glühkerzenstecker nach Anspruch 1, **dadurch gekennzeichnet, dass** die Sensorkontakte (2a-2c) an der Außenseite des Gehäuses (1) vorgesehen sind.

3. Glühkerzenstecker nach Anspruch 1, **dadurch gekennzeichnet, dass** die Sensorkontakte (2a-2c) an der Innenseite des Gehäuses (1) vorgesehen sind.

4. Glühkerzenstecker nach Anspruch 1, **dadurch gekennzeichnet, dass** die Sensorkontakte (2a-2c) teilweise an der Außen- und teilweise an der Innenseite des Gehäuses (1) vorgesehen sind.

5. Glühkerzenstecker nach einem der vorhergehenden Ansprüche, **dadurch gekennzeichnet, dass** die Sensorkontakte (2a-2c) in Form von Ringen konzentrisch zur Längsachse des Gehäuses (1) vorgesehen sind.

6. Glühkerzenstecker nach einem der vorhergehenden Ansprüche, **dadurch gekennzeichnet, dass** die außen angeordneten Sensorkontakte (2b, 2c) auf verschiedenen Durchmessern des im Durchmesser abgestuften Gehäuses (1) angeordnet sind.

7. Glühkerzenstecker nach einem der vorhergehenden Ansprüche, **dadurch gekennzeichnet, dass** der mittig im Gehäuse (1) angeordnete Hochstromanschluss (5) in Form eines federnden Kontaktes oder als Federkontakt ausgebildet ist.

8. Glühkerzenstecker nach Anspruch 1, **dadurch gekennzeichnet, dass** die Sensorkontakte in Längsrichtung außen am Gehäuse (1) parallel zur Gehäuseachse angeordnet sind.

9. Glühkerzenstecker nach Anspruch 8, **dadurch gekennzeichnet, dass** mehrfache Sätze von Sensorkontakten (2a-2c) an mehreren Winkelpositionen um den Umfang des Gehäuses (1) verteilt angeordnet sind.

## Claims

1. Glow-plug connector for a glow plug with built-in sensor, in particular built-in pressure sensor, comprising
- a casing (1) made of an electrically insulating material, which can be placed onto the glow plug, **characterized by**
- a high-current connection (5) arranged centrally in the casing (1), and connected to a high-current contact of the heating devices of the glow plug when the connector is placed thereon, and
- sensor contacts (2a-2c) provided circumferentially at the casing (1) and insulated with respect to the high-current connection (5), and connected to sensor connections of the glow plug when the connector is placed thereon.

2. Glow-plug connector according to claim 1, **characterised in that** the sensor contacts (2a-2c) are provided on the outside of the casing (1).

3. Glow-plug connector according to claim 1, **characterised in that** the sensor contacts (2a-2c) are provided on the inside of the casing (1).

4. Glow-plug connector according to claim 1, **characterised in that** the sensor contacts (2a-2c) are provided partly on the outside and partly on the inside of the casing (1).

5. Glow-plug connector according to any one of the preceding claims, **characterised in that** the sensor contacts (2a-2c) are provided in the form of rings concentric to the longitudinal axis of the casing (1).

6. Glow-plug connector according to any one of the preceding claims, **characterised in that** the externally arranged sensor contacts (2a-2c) are arranged on different diameters of the casing (1) having a graduated diameter.

7. Glow-plug connector according to any one of the preceding claims, **characterised in that** the high-current connection (5) arranged centrally in the casing (1) is constructed in the form of a springloaded contact or as a spring contact.

8. Glow-plug connector according to claim 1, **characterised in that** the sensor contacts are arranged in the longitudinal direction externally on the casing (1) parallel to the axis of the casing.

9. Glow-plug connector according to claim 8, **characterised in that** multiple sets of sensor contacts (2a-2c) are distributed at a plurality of angular positions around the circumference of the casing (1).

## Revendications

1. Connecteur de bougie à incandescence pour une bougie à incandescence avec un capteur incorporé dans celle-ci, en particulier un capteur de pression incorporé, comprenant :
- un boîtier (1) en un matériau électriquement isolant, qui peut être posé sur la bougie à incandescence, **caractérisé par**
- un raccord pour courant fort (5) disposé au centre dans le boîtier (1), qui est relié à un contact pour courant fort des dispositifs de chauffage de la bougie à incandescence lorsque le connecteur est engagé, et
- des contacts de capteur (2a-2c), isolés par rapport au raccord pour courant fort (5), qui sont disposés sur le boîtier (1) à la périphérie de celui-ci et qui sont reliés à des raccords de capteur de la bougie à incandescence lorsque le connecteur est engagé.

2. Connecteur de bougie à incandescence selon la revendication 1, **caractérisé en ce que** les contacts de capteur (2a-2c) sont prévus sur le côté extérieur du boîtier (1).

3. Connecteur de bougie à incandescence selon la revendication 1, **caractérisé en ce que** les contacts de capteur (2a-2c) sont prévus sur le côté intérieur du boîtier (1).

4. Connecteur de bougie à incandescence selon la revendication 1, **caractérisé en ce que** les contacts de capteur (2a-2c) sont prévus en partie sur le côté extérieur et en partie sur le côté intérieur du boîtier (1).

5. Connecteur de bougie à incandescence selon l'une quelconque des revendications précédentes, **caractérisé en ce que** les contacts de capteur (2a-2c) sont prévus sous la forme d'anneaux concentriques avec l'axe longitudinal du boîtier (1).

6. Connecteur de bougie à incandescence selon l'une quelconque des revendications précédentes, **caractérisé en ce que** les contacts de capteur (2b, 2c) disposés à l'extérieur sont disposés sur des diamètres différents du boîtier (1) à diamètre étagé.

7. Connecteur de bougie à incandescence selon l'une quelconque des revendications précédentes, **caractérisé en ce que** le raccord pour courant fort (5) disposé au centre dans le boîtier (1) est réalisé sous la forme d'un contact élastique ou d'un contact à ressort.

8. Connecteur de bougie à incandescence selon la revendication 1, **caractérisé en ce que** les contacts de capteur sont disposés en direction longitudinale, extérieurement sur le boîtier (1), parallèlement à l'axe du boîtier.

9. Connecteur de bougie à incandescence selon la revendication 8, **caractérisé en ce que** plusieurs jeux de contacts de capteur (2a-2c) sont disposés en plusieurs positions angulaires réparties autour de la périphérie du boîtier (1).
